# EUROPEAN PATENT APPLICATION

(11) **EP 4 729 916 A1**
(43) Date of publication of application: **22.04.2026**
(21) Application number: 24823174.8
(22) Date of filing: 20.05.2024
(51) Int. Cl.: G01M 17/007

(54) **TEST SPECIMEN TESTING SYSTEM, TEST SPECIMEN DRIVING SYSTEM, TEST SPECIMEN TESTING METHOD, AND TEST SPECIMEN TESTING PROGRAM**

(30) Priority: 16.06.2023 JP 2023098972
(71) Applicant: HORIBA, Ltd., Kyoto-shi Kyoto 601-8510 (JP)
(72) Inventor: FURUKAWA, Kazuki, Kyoto-shi, Kyoto 601-8510 (JP); SAITO, Takashi, Kyoto-shi, Kyoto 601-8510 (JP)
(74) Representative: Müller Hoffmann & Partner
(86) International application number: PCT/JP2024/018448
(87) International publication number: WO 2024/257552

(57) **Abstract**

The present invention tests a test specimen by controlling a vehicle pedal of the test specimen to a target operation amount while applying a driving resistance to the test specimen, and includes a driving device 2 that operates vehicle pedals V3 and V4 of the test specimen V or inputs an operation signal corresponding to an operation of the vehicle pedal to drive the test specimen V, a dynamometer 4 that applies a driving resistance according to a vehicle speed of the test specimen V driven by the driving device 2, a data acquisition unit 31 that acquires target operation amount data that is time-series data of a target operation amount on the vehicle pedals V3 and V4, and a driving device control unit 33 that performs feedforward control of the driving robot 2 based on the target operation amount data acquired by the data acquisition unit 31.

## Description

### Technical Field

The present invention relates to a test specimen testing system, a test specimen driving system, a test specimen testing method, and a test specimen testing program.

### Background Art

Conventionally, as disclosed in Patent Literature 1, there is a vehicle testing system including a chassis dynamometer on which a vehicle is mounted and a driving robot that drives the vehicle on the chassis dynamometer, in which the driving robot operates an accelerator, a brake, or the like of the vehicle to cause the vehicle to travel in a predetermined travel pattern, and the chassis dynamometer gives driving resistance to the vehicle.

The vehicle testing system calculates an opening command for an accelerator actuator and an opening command for a brake actuator based on an actual vehicle speed and a vehicle speed command, inputs these opening commands to the driving robot, and causes the actual vehicle speed to follow the vehicle speed command.

### Citation List

### Patent Literature

Patent Literature 1: JP 2013-134151 A

### Summary of Invention

### Technical Problem

On the other hand, as a method of testing a vehicle, it is required to test the vehicle while reproducing pedal operation of an accelerator pedal or a brake pedal in a predetermined pattern (for example, an operation pattern in a past running test) in addition to performing the test by causing an actual vehicle speed to follow a vehicle speed command.

Therefore, the present invention has been made in view of the above-described problems, and a main object thereof is to test a test specimen by controlling a vehicle pedal of the test specimen to a target operation amount while applying a driving resistance according to a vehicle speed of the test specimen.

### Solution to Problem

That is, a vehicle testing system according to the present invention is a test specimen testing system for testing a test specimen that is a vehicle or a part of the vehicle, the test specimen testing system including a driving device that operates a vehicle pedal of the test specimen or inputs an operation signal corresponding to an operation of the vehicle pedal to drive the test specimen, a dynamometer that applies a driving resistance according to a vehicle speed of the test specimen driven by the driving device, a data acquisition unit that acquires target operation amount data that is time-series data of a target operation amount on the vehicle pedal, and a driving device control unit that performs feedforward control of the driving device based on the target operation amount data acquired by the data acquisition unit.

In such a vehicle testing system, the driving device is feedforward controlled based on the target operation amount data of the vehicle pedal while the dynamometer applies the driving resistance corresponding to the vehicle speed of the test specimen, so that the test specimen can be tested by controlling the vehicle pedal of the test specimen to the target operation amount while applying the driving resistance corresponding to the vehicle speed to the test specimen.

Here, if specifications, test conditions, and the like of the test specimen to be tested by the test specimen testing system are the same as those in the past when the target operation amount data is acquired, the vehicle speed of the test specimen should also be the same as a vehicle speed in the past. However, when the specifications, test conditions, and the like of the test specimen are different, the vehicle speed of the test specimen is different from the vehicle speed in the past.

Therefore, it is desirable that the data acquisition unit acquires target vehicle speed data that is time-series data of a target vehicle speed of the test specimen, and the driving device control unit feedback-controls the driving device based on a deviation between the target vehicle speed and an actual vehicle speed of the test specimen.

With this configuration, the test specimen can be tested while the vehicle pedal of the test specimen is controlled to the target operation amount and the test specimen is controlled to the target vehicle speed. Thus, it is possible to perform the test of the test specimen that has also cleared a predetermined criterion regarding the vehicle speed while controlling the vehicle pedal of the test specimen to the target operation amount. Note that the predetermined criterion is, for example, to fall within the tolerance (allowable width) between the upper limit speed data and the lower limit speed data set for the time-series data of the target speed.

As a specific embodiment of the driving device control unit, it is desirable that the driving device control unit controls the driving device according to a preset control ratio between the feedforward control and the feedback control.

In order to make it possible to change the control ratio between the feedforward control and the feedback control in the driving device control unit according to the purpose of the test, it is desirable that the test specimen testing system of the present invention further includes a setting changing unit capable of changing the setting of the control ratio.

With this configuration, the test specimen can be tested at various control ratios such as a case where the pedal operation amount is preferentially controlled over the vehicle speed and a case where the vehicle speed is preferentially controlled over the pedal operation amount.

In order to test a test specimen by controlling an accelerator pedal of the test specimen to a target operation amount, it is preferable that the driving device operates an accelerator pedal as the vehicle pedal, and the data acquisition unit acquires time-series data of an accelerator opening degree, an accelerator depression amount, and/or an accelerator pedal position as the target operation amount data.

Here, the time-series data of the accelerator opening degree, the accelerator depression amount, and/or the accelerator pedal position may be, for example, time-series data of the accelerator opening degree, the accelerator depression amount, and/or the accelerator pedal position acquired in the past, or may be data obtained by processing the time-series data. Further, the time-series data may be obtained by simulation.

In order to test the test specimen by controlling a brake pedal of the test specimen to a target operation amount, it is desirable that the driving device operates a brake pedal as the vehicle pedal, and the data acquisition unit acquires time-series data of a brake opening degree, a brake depression amount, and/or a brake pedal position as a target operation amount of the brake pedal.

Here, the time-series data of the brake opening degree, the brake depression amount, and/or the brake pedal position may be, for example, time-series data of the brake opening degree, the brake depression amount, and/or the brake pedal position acquired in the past, or may be data obtained by processing the time-series data. Further, the time-series data may be obtained by simulation.

Further, a test specimen driving system according to the present invention includes a driving device that operates a vehicle pedal of a test specimen or inputs an operation signal corresponding to an operation of the vehicle pedal to drive the test specimen, a data acquisition unit that acquires target operation amount data that is time-series data of a target operation amount on the vehicle pedal, and a driving device control unit that performs feedforward control of the driving device based on the target operation amount data acquired by the data acquisition unit.

Further, a test specimen testing method according to the present invention is a test specimen testing method for testing a test specimen that is a vehicle or a part of the vehicle, the test specimen testing method including using a driving device that operates a vehicle pedal of the test specimen or inputs an operation signal corresponding to an operation of the vehicle pedal to drive the test specimen, and a dynamometer that applies a driving resistance according to a vehicle speed of the test specimen driven by the driving device, and performing feedforward control of the driving device based on time-series data of a target operation amount on the vehicle pedal to test the test specimen.

Furthermore, a test specimen testing program according to the present invention is a program used in a test specimen testing system including a driving device that operates a vehicle pedal of the test specimen that is a vehicle or a part of the vehicle or inputs an operation signal corresponding to an operation of the vehicle pedal to drive the test specimen, and a dynamometer that applies a driving resistance according to a vehicle speed of the test specimen driven by the driving device, the program causing a computer to include a function as a data acquisition unit that acquires target operation amount data that is time-series data of a target operation amount on the vehicle pedal, and a function as a driving device control unit that performs feedforward control of the driving device based on the target operation amount data acquired by the data acquisition unit.

### Advantageous Effects of Invention

According to the present invention described above, it is possible to test a test specimen by controlling a vehicle pedal of the test specimen to a target operation amount while applying a driving resistance corresponding to a vehicle speed of the test specimen.

### Brief Description of Drawings

FIG. 1 is an overall schematic view of a test specimen testing system according to an embodiment of the present invention.

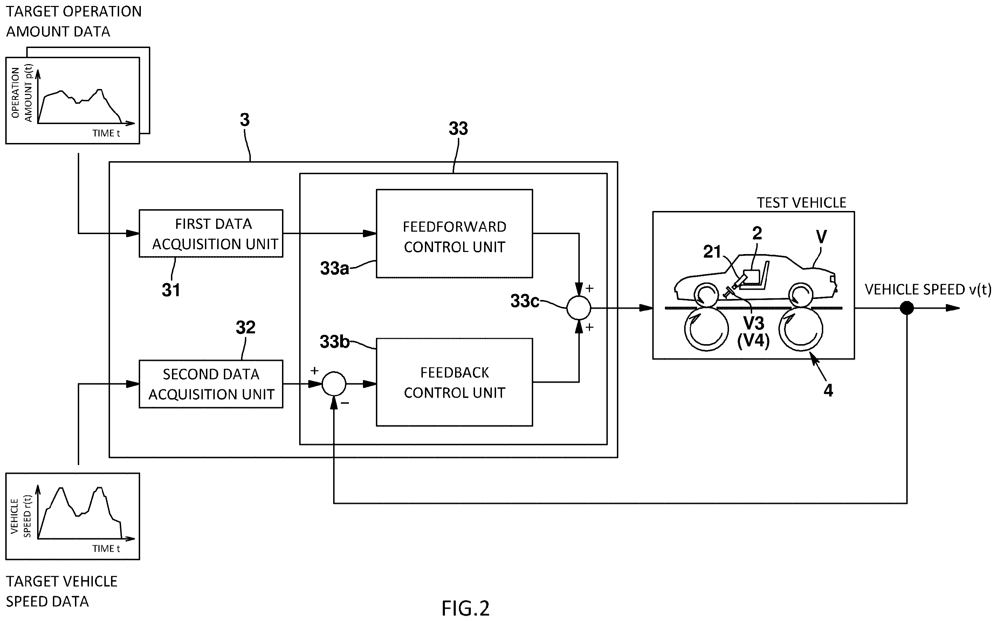

FIG. 2 is a functional block diagram of a robot control device according to the embodiment.
FIG. 3 is a functional block diagram of a robot control device according to a modified embodiment.
FIG. 4 is a diagram illustrating an example of a setting screen for performing change input according to a modified embodiment.

### Description of Embodiments

### <One embodiment of present invention>

Hereinafter, an embodiment of a vehicle testing system according to the present invention will be described with reference to the drawings. Note that any of the drawings illustrated below is schematically omitted or exaggerated as appropriate for easy understanding. The same components are denoted by the same reference numerals, and the description thereof will be omitted as appropriate.

### <1. Configuration of vehicle testing system>

A vehicle testing system 100 of the present embodiment tests a test specimen V that is a vehicle or a part of the vehicle. Here, the vehicle may be an internal combustion engine vehicle, a hybrid vehicle (HV), an electric vehicle (EV), a fuel cell vehicle (FCV), a hydrogen engine vehicle, or the like. In addition, the test specimen V may be not only a completed vehicle but also a part of a vehicle having a vehicle pedal (at least one of an accelerator pedal V3 or a brake pedal V4) and a configuration (for example, a wheel, an axle, or the like) that can apply driving resistance by the dynamometer 2.

Specifically, the vehicle testing system includes a driving robot (driving device) 2 that operates a vehicle pedal (an accelerator pedal V3, a brake pedal V4, or the like) of the test specimen V to automatically drive the test specimen V, a robot control device (driving device control device) 3 that controls the driving robot 2, a dynamometer 4 that gives a driving resistance corresponding to a vehicle speed of the test specimen V to the test specimen V driven by the driving robot 2, and a dynamometer control device 5 that controls the dynamometer 4.

### <2. Dynamometer 4 and dynamometer control device 5>

First, the dynamometer 4 and the dynamometer control device 5 will be described.

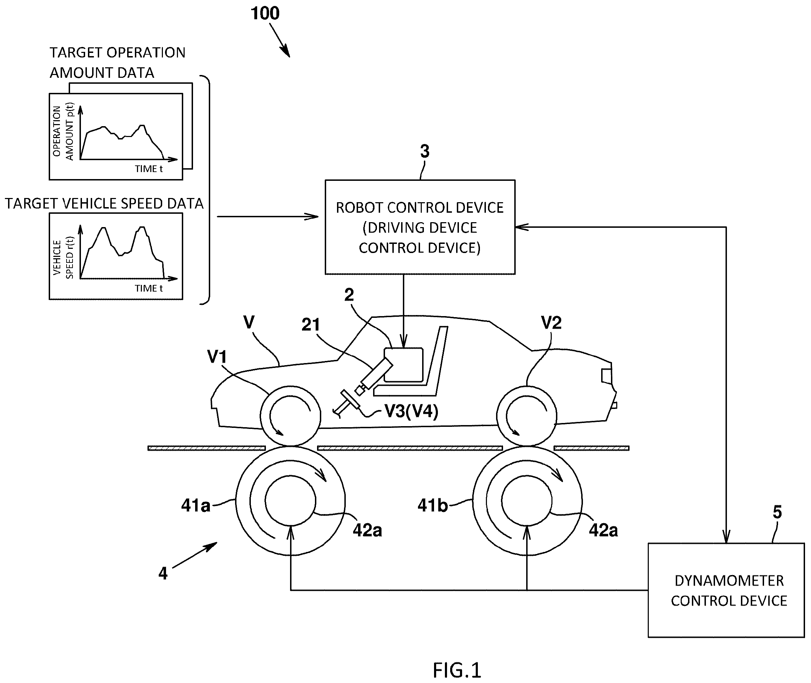

As illustrated in FIG. 1, the dynamometer 4 is a so-called chassis dynamometer, and includes rollers 41a and 41b on which wheels V1 and V2 of the test specimen V are placed, and power absorbers 42a and 42b such as motors connected to the rollers 41a and 41b. Note that, in FIG. 1, the front wheel V1 and the rear wheel V2 of the test specimen V are placed on the rollers 41a and 41b, respectively, but the drive wheel of the test specimen V may be placed on the roller. In addition, the dynamometer 4 may be connected to each wheel (hub) or each axle of the test specimen V.

The dynamometer control device 5 controls torque of the power absorbers 42a and 42b so as to achieve a target driving resistance determined in a predetermined travel pattern. Specifically, the dynamometer control device 5 controls the torque of the power absorbers 42a and 42b so that the target driving resistance corresponding to the vehicle speed of the test specimen V is applied to the test specimen V driven by the driving robot 2 and traveling on the rollers 41a and 41b. Here, the target driving resistance according to the vehicle speed of the test specimen V may be obtained based on the actual speed of the test specimen V, or may be obtained based on the target vehicle speed of the test specimen V. Note that the dynamometer control device 5 is, for example, a computer including a CPU, a memory, an input/output interface, an AD converter, and the like, and is configured so that the CPU, a peripheral device, and the like perform their functions in cooperation with each other according to a program stored in the memory.

### <3. Driving robot 2 and robot control device 3>

The driving robot 2 is a driving device that drives the test specimen V, and includes an actuator 21 that is placed on, for example, a driver's seat of the test specimen V and operates an accelerator pedal V3, a brake pedal V4, a shift lever (not illustrated), an ignition switch (not illustrated), or the like of the test specimen V.

Specifically, the driving robot 2 includes, as the actuator 21, an accelerator actuator that depresses the accelerator pedal V3, a brake actuator that depresses the brake pedal V4, a shift lever actuator that operates a shift lever, a switch actuator that operates an ignition switch, or the like. In addition, the driving robot 2 may include a clutch actuator or the like for depressing the clutch pedal as necessary. Note that, in FIG. 1, for convenience, only one actuator is illustrated without distinguishing each actuator described above.

The robot control device 3 controls the driving robot 2 as a driving device, and drives the test specimen V to which the driving resistance is applied by the dynamometer 4 by controlling each actuator 21 of the driving robot 2. Note that the robot control device 3 is a computer including a CPU, a memory, an input/output interface, an AD converter, and the like, and is configured to exert its functions by the CPU, peripheral devices, and the like cooperating with each other according to an operation control program stored in the memory.

The robot control device 3 of the present embodiment controls each actuator 21 of the driving robot 2 based on target operation amount data that is time-series data of a target operation amount on a vehicle pedal (accelerator pedal V3 or brake pedal V4) and target vehicle speed data that is time-series data of a target vehicle speed of the test specimen V.

Specifically, the robot control device 3 controls the accelerator actuator 21 based on target operation amount data that is time-series data of a target operation amount on the accelerator pedal V3 and target vehicle speed data that is time-series data of the target vehicle speed of the test specimen V.

Here, the target operation amount data of the accelerator pedal V3 is, for example, time-series data of a pedal operation amount such as an accelerator opening degree, an accelerator depression amount, and/or an accelerator pedal position of the accelerator pedal V3 obtained in a past running test, and may be obtained by processing the time-series data of the pedal operation amount. Note that examples of the pedal operation amount of the accelerator pedal V3 include a digital value from a computer on the vehicle side, a pedal position measured by a distance meter, and a pedal angle measured by an angle sensor.

Further, the robot control device 3 controls the brake actuator 21 based on target operation amount data that is time-series data of a target operation amount of the brake pedal V4 and the target vehicle speed data that is time-series data of the target vehicle speed of the test specimen V.

Here, the target operation amount data of the brake pedal V4 is, for example, time-series data of a pedal operation amount such as a brake opening degree, a target brake depression amount, and/or a brake pedal position of the brake pedal V4 obtained in a past running test, and may be obtained by processing the time-series data of the pedal operation amount. Note that the pedal operation amount of the brake pedal V4 is a digital value from a computer on the vehicle side, a pedal position measured by a distance meter, a pedal angle measured by an angle sensor, or the like.

Note that the past running test in the target operation amount data of the accelerator pedal V3 and the target operation amount data of the brake pedal V4 may be an on-road running test, an on-platform running test, or a simulation running test. In addition, the target operation amount data of the accelerator pedal V3 and the target operation amount data of the brake pedal V4 may be the same running test, or may be different running tests.

Furthermore, the target vehicle speed data is, for example, time-series data of a vehicle speed obtained in a past running test in which the target operation amount data is acquired, and may be obtained by processing the time-series data of the vehicle speed. Note that, when the target operation amount data of the accelerator pedal V3 and the target operation amount data of the brake pedal V4 are obtained in different running tests, the target vehicle speed data may be time-series data of a vehicle speed obtained in a past running test in which the target operation amount data of the accelerator pedal V3 is acquired, or time-series data of a vehicle speed obtained in a past running test in which the target operation amount data of the brake pedal V4 is acquired. Alternatively, the time-series data of the vehicle speeds obtained in the separate past running tests may be combined.

Then, the robot control device 3 performs feedforward control of each actuator 21 of the driving robot 2 based on the target operation amount data by the control algorithm of the two-degree-of-freedom control system, and performs feedback control of each actuator 21 of the driving robot 2 based on the target vehicle speed data.

Specifically, the robot control device 3 includes a first data acquisition unit 31 that acquires the target operation amount data, a second data acquisition unit 32 that acquires the target vehicle speed data, and a robot control unit (driving device control unit) 33 that controls an actuator 21 such as an accelerator actuator or a brake actuator of the driving robot 2.

The first data acquisition unit 31 may acquire the target operation amount data from a data storage unit (not illustrated) provided inside or outside the robot control device 3 via a wired or wireless communication line, or may acquire the target operation amount data input to the robot control device 3 by the user through an input means (not illustrated).

The second data acquisition unit 32 may acquire target vehicle speed data from a data storage unit (not illustrated) provided inside or outside the robot control device 3 via a wired or wireless communication line, or may acquire target vehicle speed data input by the user to the robot control device 3 by an input means (not illustrated).

The robot control unit 33 includes a feedforward control unit 33a that performs feedforward control of the driving robot 2 based on the target operation amount data acquired by the first data acquisition unit 31, and a feedback control unit 33b that performs feedback control of the driving robot 2 based on the target vehicle speed data acquired by the second data acquisition unit 32.

The feedforward control unit 33a obtains an accelerator depression amount Acc_{FF}(t) or a brake depression amount Brk_{FF}(t) of the feedforward control system from the target operation amount p(t) at the current time.

Further, the feedback control unit 33b inputs a deviation between a target vehicle speed r(t) and an actual vehicle speed v(t) at the current time to a controller (for example, PID control), and obtains an accelerator depression amount Acc_{FB}(t) or a brake depression amount Brk_{FB}(t) of the feedback control system.

Furthermore, the robot control unit 33 adds the accelerator depression amount Acc_{FF}(t) of the feedforward control unit 33a and the accelerator depression amount Acc_{FB}(t) of the feedback control unit 33b by an adder 33c. Thus, the accelerator depression amount Acc_{FF}(t) of the feedforward control unit 33a is corrected (supplemented) using the accelerator depression amount Acc_{FB}(t) of the feedback control unit 33b. Then, the robot control unit 33 controls the accelerator actuator 21 by an accelerator depression amount command value indicating the corrected accelerator depression amount (Acc(t) = Acc_{FB}(t) + Acc_{FB}(t)).

Here, when the accelerator depression amount Acc_{FF}(t) and the accelerator depression amount Acc_{FB}(t) are added in the adder 33c, by multiplying each of them by a coefficient, the accelerator actuator 21 can be controlled according to a preset control ratio between the feedforward control and the feedback control.

Further, the robot control unit 33 adds the brake depression amount Brk_{FF}(t) of the feedforward control unit 33a and the brake depression amount Brk_{FB}(t) of the feedback control unit 33b by the adder 33c. Thus, the brake depression amount Brk_{FF}(t) of the feedforward control unit 33a is corrected (supplemented) using the brake depression amount Brk_{FB}(t) of the feedback control unit 33b. Then, the robot control unit 33 controls the brake actuator 21 with a brake depression amount command value indicating the corrected brake depression amount (Brk(t) = Brk_{FB}(t) + Brk_{FB}(t)).

Here, when the brake depression amount Brk_{FF}(t) and the brake depression amount Brk_{FB}(t) are added in the adder 33c, the brake actuator 21 can be controlled according to a preset control ratio between the feedforward control and the feedback control by multiplying each of them by a coefficient.

### <4. Effects of present embodiment>

According to the vehicle testing system 100 of the present embodiment configured as described above, since the feedforward control is performed on the driving robot (driving device) 2 based on the target operation amount data of the vehicle pedal (accelerator pedal V3 or brake pedal V4) while the dynamometer 4 applies the driving resistance corresponding to the vehicle speed of the test specimen V to the test specimen V, it is possible to test the test specimen V by controlling the vehicle pedal (accelerator pedal V3 or brake pedal V4) of the test specimen V to the target operation amount while applying the driving resistance to the test specimen V.

Further, since the robot control unit 33 feedback-controls the driving robot 2 based on the deviation between the target vehicle speed and the actual vehicle speed of the test specimen V, the test specimen V can be tested while controlling the vehicle pedal (accelerator pedal V3 or brake pedal V4) of the test specimen V to the target operation amount and controlling the test specimen V to the target vehicle speed. Thus, it is possible to perform the test of the test specimen V that has also cleared the predetermined criterion regarding the vehicle speed while matching an accelerator operation amount or a brake operation amount with the time-series data acquired in the past. Note that the predetermined criterion is, for example, to fall within the tolerance (allowable width) between the upper limit speed data and the lower limit speed data set for the time-series data of the target speed.

### <5. Other embodiments>

For example, in the above embodiment, the position is controlled using the target operation amount data in both the accelerator pedal V3 and the brake pedal V4, but the position may be controlled using the target operation amount data in one of the accelerator pedal V3 and the brake pedal V4.

In this case, in the pedal that does not perform the control using the target operation amount data, the feedforward control unit differentiates the target vehicle speed r(t), inputs a differential value (acceleration) obtained by the differentiation to a traveling performance map, and obtains the accelerator depression amount Acc_{FF}(t) or the brake depression amount Brk_{FF}(t) of the feedforward control system (hereinafter, conventional method). Note that the traveling performance map indicates the relationship among the vehicle speed, the acceleration, and the throttle opening obtained for each test specimen (test vehicle), and is data from which the accelerator depression amount (brake depression amount) can be obtained from the speed and the acceleration (deceleration).

It may be configured such that, for each of the accelerator pedal V3 and the brake pedal V4, either the method of controlling the position using the target operation amount data (the method of the present invention) or the conventional method can be set for use depending on the vehicle type of the test specimen V. For example, in a vehicle (for example, an internal combustion engine vehicle) in which the position of the accelerator pedal V3 is an important test item, it is conceivable to apply the method of the present invention to the control of the accelerator pedal V3 and to apply the conventional method to the control of the brake pedal V4. Further, in a vehicle (for example, an electric vehicle) in which the position of the brake pedal V4 is an important test item, it is conceivable to apply the conventional method to the control of the accelerator pedal V3 and to apply the method of the present invention to the control of the brake pedal V4.

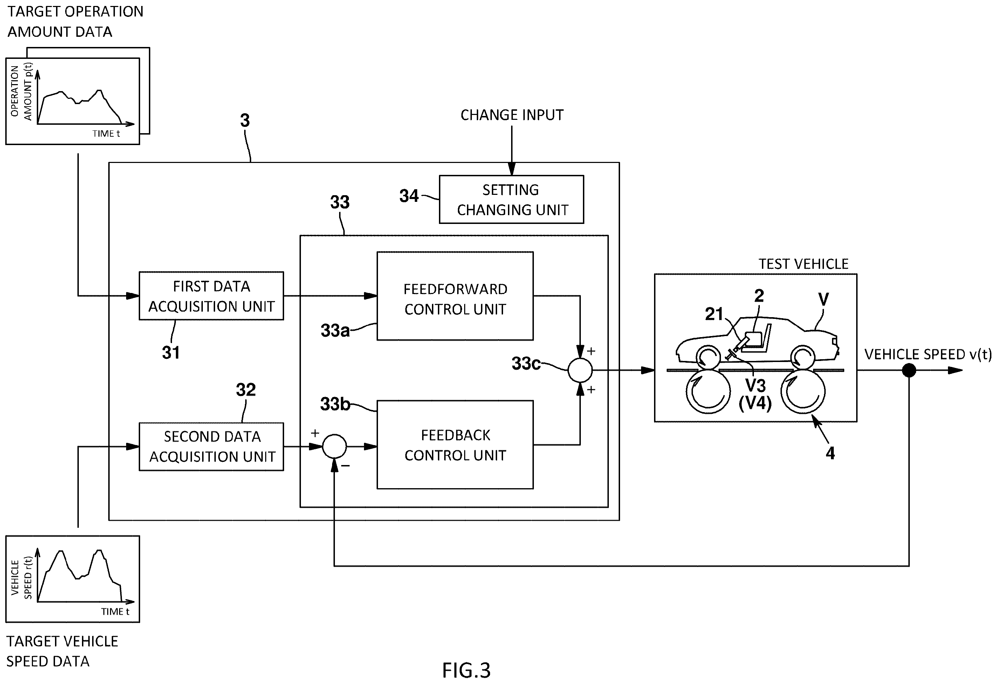

Furthermore, as illustrated in FIG. 3, the robot control device 3 may further include a setting changing unit 34 capable of changing the setting of the control ratio between the feedforward control and the feedback control. The setting changing unit 34 can change, for example, a coefficient multiplied by the depression amount obtained by the feedforward control unit 33a and a coefficient multiplied by the depression amount obtained by the feedback control unit 33b. Thus, the control ratio can be changed. With this configuration, the test specimen V can be tested at various control ratios such as a case where the pedal operation amount is preferentially controlled over the vehicle speed and a case where the vehicle speed is preferentially controlled over the pedal operation amount.

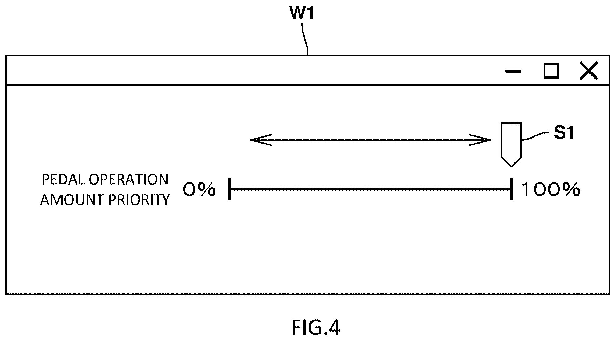

Here, change input to the setting changing unit 34 can be performed using, for example, the setting screen W1 illustrated in FIG. 4. Note that the setting screen W1 is displayed on the display by the function (screen display unit) of the robot control device 3. On the setting screen W1, the user can perform change input of the priority of the pedal operation amount by sliding a slider S1 left and right by an input means such as a mouse. When the priority of the pedal operation amount is set to 0%, the vehicle speed is controlled while ignoring the pedal operation amount. On the other hand, when the priority of the pedal operation amount is set to 100%, the pedal operation amount is controlled ignoring the vehicle speed. In this change input, the user may input a numerical value into a text box or the like by an input means such as a keyboard, or a slide operation input by the slider S1 and a numerical value input into a text box or the like may be used in combination.

In addition, when the time-series data of the pedal operation amount obtained in the past running test is processed as the target operation amount data, the processing may be performed in the entire period or a part of the period as the processing mode. As the processing of a part of the period, for example, only an acceleration period may be processed, only a deceleration period may be processed, or only a period in which the vehicle speed is included in a predetermined range in a predetermined period may be processed.

In the above embodiment, a completed vehicle is tested. However, for example, an engine dynamometer may be used to test an engine, or a dynamometer may be used to test a powertrain.

The driving device of the embodiment is configured using a driving robot that actually operates the vehicle pedal to drive the test specimen, but may input an operation signal corresponding to the operation of the vehicle pedal to the test specimen to drive the test specimen.

In addition, in the above embodiment, an example in which the robot control device and the dynamometer control device are configured by separate computers has been described. However, the robot control device may be configured by one or a plurality of computers, the dynamometer control device may be configured by one or a plurality of computers, or the robot control device and the dynamometer control device may be configured by one computer.

In addition, the test specimen testing system may further include an exhaust gas analysis device that analyzes exhaust gas of the test specimen. Alternatively, the test specimen testing system may further include a fuel consumption measuring device that measures the fuel consumption (fuel efficiency) of the test specimen or an electric cost measurement device that measures the electric power consumption (electric efficiency).

In addition, various modifications and combinations of the embodiments may be made without departing from the gist of the present invention.

### Industrial Applicability

According to the present invention, it is possible to test a test specimen by controlling a vehicle pedal of the test specimen to a target operation amount while applying a driving resistance to the test specimen.

### Reference Signs List

- 100: test specimen testing system
- V: test specimen
- V1: vehicle pedal
- 2: driving robot (driving device)
- 3: robot control device (driving device control device)
- 31: data acquisition unit
- 32: data acquisition unit
- 33: robot control unit (driving device control unit)
- 34: setting changing unit
- 4: dynamometer
- 5: dynamometer control device

## Claims

1. A test specimen testing system for testing a test specimen that is a vehicle or a part of the vehicle, the test specimen testing system comprising:
a driving device that operates a vehicle pedal of the test specimen or inputs an operation signal corresponding to an operation of the vehicle pedal to drive the test specimen;
a dynamometer that applies a driving resistance according to a vehicle speed of the test specimen driven by the driving device;
a data acquisition unit that acquires target operation amount data that is time-series data of a target operation amount on the vehicle pedal; and
a driving device control unit that performs feedforward control of the driving device based on the target operation amount data acquired by the data acquisition unit.

2. The test specimen testing system according to claim 1, wherein the data acquisition unit acquires target vehicle speed data that is time-series data of a target vehicle speed of the test specimen, and
the driving device control unit feedback-controls the driving device based on a deviation between the target vehicle speed and an actual vehicle speed of the test specimen.

3. The test specimen testing system according to claim 2, wherein the driving device control unit controls the driving robot according to a preset control ratio between the feedforward control and the feedback control.

4. The test specimen testing system according to claim 3, further comprising a setting changing unit capable of changing a setting of the control ratio.

5. The test specimen testing system according to any one of claims 1 to 4, wherein the driving device operates an accelerator pedal as the vehicle pedal, and
the data acquisition unit acquires time-series data of an accelerator opening degree, an accelerator depression amount, and/or an accelerator pedal position as the target operation amount data.

6. The test specimen testing system according to any one of claims 1 to 5, wherein the driving device operates a brake pedal as the vehicle pedal, and
the data acquisition unit acquires time-series data of a brake opening degree, a brake depression amount, and/or a brake pedal position as a target operation amount of the brake pedal.

7. A test specimen driving system comprising:
a driving device that operates a vehicle pedal of a test specimen or inputs an operation signal corresponding to an operation of the vehicle pedal to drive the test specimen;
a data acquisition unit that acquires target operation amount data that is time-series data of a target operation amount on the vehicle pedal; and
a driving device control unit that performs feedforward control of the driving device based on the target operation amount data acquired by the data acquisition unit.

8. A test specimen testing method for testing a test specimen that is a vehicle or a part of the vehicle, the test specimen testing method comprising:
using a driving device that operates a vehicle pedal of the test specimen or inputs an operation signal corresponding to an operation of the vehicle pedal to drive the test specimen, and a dynamometer that applies a driving resistance according to a vehicle speed of the test specimen driven by the driving device, and
performing feedforward control of the driving device based on time-series data of a target operation amount on the vehicle pedal to test the test specimen.

9. A test specimen testing program used in a test specimen testing system including: a driving device that operates a vehicle pedal of the test specimen that is a vehicle or a part of the vehicle or inputs an operation signal corresponding to an operation of the vehicle pedal to drive the test specimen; and a dynamometer that applies a driving resistance according to a vehicle speed of the test specimen driven by the driving device, the test specimen testing program causing a computer to comprise:
a function as a data acquisition unit that acquires target operation amount data that is time-series data of a target operation amount on the vehicle pedal; and
a function as a driving device control unit that performs feedforward control of the driving device based on the target operation amount data acquired by the data acquisition unit.
